# EUROPÄISCHE PATENTANMELDUNG

(11) **EP 2 287 260 A1**
(43) Veröffentlichungstag der Anmeldung: **23.02.2011**
(21) Anmeldenummer: 09008659.6
(22) Anmeldetag: 02.07.2009
(51) Int. Cl.: C09D 175/06, C08G 18/80, C08G 18/75, C08G 18/76, C08G 18/79, C08G 18/34

(54) **Vernetzbare Polyurethan-Dispersion**

(71) Anmelder: Bayer MaterialScience AG, 51368 Leverkusen (DE)
(72) Erfinder: Dörr, Sebastian, Dr., 40597 Düsseldorf (DE); Blum, Harald, Dr., 97840 Hafenlohr (DE); Müller, Heino, 51375 Leverkusen (DE)

(57) **Zusammenfassung**

Die Erfindung betrifft neue wässrige, vernetzbare Polyurethan-Dispersionen auf Basis von Terephthalsäure-Polyestern, ihre Herstellung und ihre Verwendung in Kombination mit hydroxyfunktionellen Reaktionspartnern zur Herstellung von Lacken, Beschichtungen und Schlichten, die sich vor allem durch hohe Filmhärte bei gleichzeitig hoher Elastizität und sehr guter Haftung auszeichnen

## Beschreibung

Die Erfindung betrifft neue wässrige, vemetzbare Polyurethan-Dispersionen auf Basis von Terephthalsäure-Polyestern, ihre Herstellung und ihre Verwendung in Kombination mit hydroxyfunktionellen Reaktionspartnern zur Herstellung von Lacken, Beschichtungen und Schlichten, die sich vor allem durch hohe Filmhärte bei gleichzeitig hoher Elastizität und sehr guter Haftung auszeichnen

Wässrige Bindemittel auf Basis von Polyurethan- bzw. Polyester- Dispersionen sind grundsätzlich bekannt, vgl. beispielsweise Houben-Weyl, Methoden der organischen Chemie, u. Aufl. Band E 20, S. 1659 (1987) bzw. J. W. Rosthauser, K. Nachtkamp in " Advances in Urethane Science and Technology", K. C. Frisch und D. Klempner, Editiors, Vol. 10 , S. 121-162 (1987), D.Dietrich, K. Uhlig in Ullmann's Encyclopedia of Industrial Chemistry, Vol. A 21, S. 677 (1992).

In den letzten Jahren stieg die Bedeutung wässriger Lacke und Beschichtungsmittel aufgrund immer strengerer Emissionsrichtlinien im Bezug auf die bei der Lackapplikation freiwerdenden Lösungsmittel stark an. Obwohl inzwischen bereits für viele Anwendungsbereiche wässrige Lacksysteme zur Verfügung stehen, können diese das hohe Qualitätsniveau konventioneller, Lösungsmittelhaltiger Lacke hinsichtlich Lösungsmittel- und Chemikalienbeständigkeit, hoher Filmhärte bei gleichzeitig hoher Elastizität, verbunden mit sehr guter Haftung, oftmals nicht erreichen.

EP 1 862 486 beschreibt lagerstabile Polyurethandispersionen mit Pyrazolblockierten Isocyanatgruppen ähnlich wie sie gemäß EP 942 023 erhalten werden können, die jedoch Lösungsmittelfrei bzw. -arm sind und insbesondere kein N-Methylpyrollidon oder Butylglykol enthalten. Die aus diesen Dispersionen hergestellten Beschichtungen weisen eine gute Filmoptik und eine gute Chemikalienbeständigkeit auf, führen aber in Kombination mit hydroxyfunktionellen Dispersionen in der Regel zu Beschichtungen mit Pendelhärten nach DIN 53157 im Bereich von etwa 80 bis 110 Sekunden. Für Anwendungen, in denen beispielsweise deutlich höhere Härten gefordert werden, können diese Produkte somit nicht eingesetzt werden. Darüber hinaus wären verbesserte Haftungswerte für manche Anwendung ebenfalls wünschenswert.

Aufgabe der vorliegenden Erfindung war daher, vernetzbare, Lösungsmittelfreie Polyurethan-Dispersionen zur Verfügung zu stellen, die zur Herstellung hochwertiger Lacke und Beschichtungen mit hoher Filmhärte und gleichzeitig hoher Elastizität, guter Filmoptik und Lösungsmittel- bzw. Chemikalienbeständigkeit und sehr guter Haftung geeignet sind.

Überraschenderweise wurde gefunden, dass spezielle vernetzbare Polyurethan-Dispersionen auf Basis von Terephthalsäure-Polyestern, Polyisocyanaten und Blockierungsmitteln alle gestellten Anforderungen sehr gut erfüllen, und in Kombination mit hydroxyfunktionellen wässrigen bzw. wasserverdünnbaren Reaktionspartnern zu Beschichtungsmitteln mit dem geforderten Eigenschaftsniveau aushärtbar sind. Darüber hinaus ermöglichen die erfindungsgemäßen vemetzbaren Polyurethan-Dispersionen die einfache Herstellung von vemetzbaren Bindemittelkombinationen, die zudem bei Raumtemperatur eine physikalische Trocknung aufweisen und so beispielsweise weniger anfällig auf negative Einflüsse während und nach der Applikation auf die Oberflächenqualität von Beschichtungen sind, beispielsweise durch den Einfluss von Staubpartikeln.

Ein Gegenstand der Erfindung sind daher vemetzbare Polyurethan-Dispersionen enthaltend
a) mindestens einen hydroxyfunktionellen aromatischen Polyester mit einer mittleren OH-Funktionalität von 1,5 bis 3,5 hergestellt aus Terephthalsäure"
b) mindestens ein isocyanatreaktiven Hydrophilierungsmittel, das mindestens eine Säuregruppe und mindestens eine gegenüber lsocyanatgruppen reaktionsfähigen Gruppe aufweist,
c) mindestens ein, mindestens difunktionelles Polyisocyanat und
d) mindestens ein gegenüber NCO-Gruppen reaktives Blockierungsmittel.

Ein weiterer Gegenstand der Erfindung sind vemetzbare Polyurethan-Dispersionen, wobei sie Umsetzungsprodukte enthalten aus
a) 20 bis 80 Gew.-% mindestens eines hydroxyfunktionellen aromatischen Polyesters mit einer mittleren OH-Funktionalität von 1,75 bis 3 hergestellt aus Terephthalsäure,
b) 0,7 bis 9 Gew. -% mindestens eines isocyanatreaktiven Hydrophilierungsmittels, das mindestens eine Säuregruppe und mindestens eine gegenüber lsocyanatgruppen reaktionsfähigen Gruppe aufweist,
c) 15 bis 60 Gew.-% mindestens eines, mindestens difunktionellen Polyisocyanates,
d) 2 bis 30 Gew.-% mindestens eines gegenüber NCO-Gruppen reaktives Blockierungsmittel und
e) 0 bis 40 Gew.-% sonstiger Komponenten,
   wobei sich die Prozentangaben a) bis e) zu 100% ergänzen.

Ein weiterer Gegenstand der Erfindung sind vemetzbare Polyurethan-Dispersionen, wobei sie Umsetzungsprodukte enthalten aus
a) 30 bis 65 Gew.-% mindestens eines hydroxyfunktionellen aromatischen Polyesters mit einer mittleren OH-Funktionalität von 1,75 bis 3 hergestellt aus Terephthalsäure,
b) 1 bis 6 Gew. -% mindestens eines isocyanatreaktiven Hydrophilierungsmittels, das mindestens eine Säuregruppe und mindestens eine gegenüber Isocyanatgruppen reaktionsfähigen Gruppe aufweist,
c) 30 bis 50 Gew.-% mindestens eines, mindestens difunktionellen Polyisocyanates,
d) 4 bis 18 Gew.-% mindestens eines gegenüber NCO-Gruppen reaktives Blockierungsmittel und
e) 0 bis 30 Gew.-% sonstiger Komponenten,
   wobei sich die Prozentangaben a) bis e) zu 100% ergänzen.

Ein weiterer Gegenstand der Erfindung sind ebenfalls wässrige Bindemittelkombinationen enthaltend
A) mindestens eine wässrige Dispersion, Lösung, Emulsion und/oder Suspension eines Polymeren bzw. Oligomeren, bzw. mindestens ein wasserverdünnbares, wasserdispergierbares und oder wasserlösliches Polymer und/oder Oligomer und/oder Monomer und
B) mindestens eine erfindungsgemäße vernetzbare Polyurethan-Dispersion.

Ebenfalls ein Gegenstand der Erfindung sind ebenfalls wässrige Bindemittelkombinationen enthaltend
A) 40 bis 98 Gew.-% mindestens einer wässrige Dispersion, Lösung, Emulsion und/oder Suspension eines hydroxyfunktionellen Polymeren bzw. Oligomeren, bzw. mindestens eines wässrigen bzw. wasserverdünnbaren bzw. wasserdispergierbaren hydroxyfunktionellen Polymer und/oder Oligomer und/oder Monomer,
B) 2 bis 60 Gew.-% mindestens einer erfindungsgemäßen vernetzbaren Polyurethan-Dispersion.

Weiterhin ein Gegenstand der Erfindung ist auch ein einstufiges Verfahren zur Herstellung der erfindungsgemäßen vernetzbaren Polyurethan-Dispersionen, wobei alle nicht isocyanatfunktionellen Komponenten in einem Lösungsmittel, vorzugsweise Aceton, vorgelegt werden, die lsocyanatkomponente zugegeben wird und ggf. in Gegenwart geeigneter Katalysatoren wie beispielsweise Dibutylzinndilaurat, Zinn-2-oktoat, Dibutylzinnoxid oder Diazabicyclononan solange umgesetzt wird, bis alle Komponenten in das Polymer eingebaut sind. Falls nicht bereits vorher erfolgt, wird dann zur Salzbildung entsprechendes Neutralisationsmittel zugegeben und durch Zugabe von Wasser bzw. durch Überführen in eine wässrige Vorlage dispergiert. Parallel dazu oder anschließend daran wird das Lösungsmittel destillativ entfernt.

Dabei wird vorzugsweise ein Verhältnis von isocyanatreaktiven Gruppen zu Isocyanatgruppen von 1:1 bis 1: 1,1 gewählt.

Es ist selbstverständlich auch möglich, Varianten dieses Verfahrens anzuwenden, so kann beispielsweise die Reaktion mehrstufig durchgeführt werden, indem beispielsweise zunächst nur ein Teil der isocyanatreaktiven Komponenten mit der Polyisocyanatkomponente umgesetzt wird, und in einem zweiten Reaktionsschritt, der ggf. auch erst nach dem Dispergieren erfolgen kann, die verbleibenden lsocyanatgruppen mit weiteren isocyanatreaktiven Komponenten zur Reaktion gebracht werden.

Ein weiterer Gegenstand der Erfindung ist auch die Verwendung der erfindungsgemäßen vernetzbaren Polyurethan-Dispersionen in Kombination mit beliebigen wässrigen, wasserverdünnbaren und/oder wasserdispergierbaren hydroxyfunktionellen Polymeren bzw. Oligomeren zur Herstellung von bei Raumtemperatur bis mindestens 40°C lagerstabilen Bindemittelkombinationen, die bei erhöhten Temperaturen, vorzugsweise 90 bis 180 °C zu hochwertigen Lacken und Beschichtungen bzw. Schlichten eingebrannt werden können.

Ebenfalls ein Gegenstand der Erfindung ist die Verwendung der erfindungsgemäßen vemetzbaren Polyurethan-Dispersionen für Grundierungen, Einbrennfüllerlackierungen, Einschichtlacken, Zwischenschichtlacken, Basislacken, Steinschlagschutzgrundierungen, Klarlacken, pigmentierte Lacken, Dekorlacke, Schutzlacken, Decklacken und Schlichten jeglicher Art.

Geeignete hydroxyfunktionelle aromatische Polyester a) können nach an sich bekannten Verfahren unter Abspaltung von Wasser bei Temperaturen von 100 °C bis 260°C, ggf. unter Mitverwendung üblicher Veresterungskatalysatoren wie beispielsweise para-Toluol-sulphonsäure, Dibutylzinndilaurat, HCI, Zinn(II)chlorid, usw., vorzugsweise nach dem Prinzip einer Schmelz- oder Azeotropkondensation, ggf. unter Anlegen eines Vakuums bzw. dem Einsatz eines Schleppgases aus Mono-, Di-, Tri-und/oder Tetracarbonsäuren bzw. deren Anhydriden, mono-, di-, tri- und/oder tetrafunktionellen Alkoholen und ggf. Lactonen hergestellt werden.

Im Falle einer azeotropen Veresterung der Polyesterkomponenten wird das Schleppmittel, üblicherweise Isooctan, Xylol, Toluol oder Cyclohexan nach beendeter Reaktion im Vakuum abdestilliert.

Bevorzugtes Herstellverfahren für die Polyester a) ist eine Schmelzkondensation unter reduziertem Druck.

Die hydroxyfunktionellen aromatischen Polyester a) weisen eine durchschnittliche OH-Funktionalität von 1,5 bis 3,5, vorzugsweise von 1,75 bis 3 und besonders bevorzugt von 1,9 bis 2,75 auf.

Es können dabei auch Mischungen verschiedener Polyester und auch Mischungen von Polyestern mit unterschiedlichen Funktionalitäten eingesetzt werden. Die Mitverwendung beispielsweise von Polyestern mit einer Funktionalität von kleiner 2 in diesen Polyestermischungen ist in untergeordneten Mengen möglich.

Die Polyester a) haben rechnerisch ermittelte theoretische Molekulargewichte von 500 bis 12000 g /mol, vorzugsweise von 900 bis 3500 g/mol.

Das theoretische Molekulargewicht der Polyester wird bestimmt nach der Formel: Masse des Ansatzes [g] / (Mol COOH + Mol OH)- Val COOH.

Die hydroxyfunktionelle, aromatische Polyesterkomponente a) enthält mindestens einen Polyester, der das Umsetzungsprodukt ist aus
a1) Terephthalsäure und ggf. mindestens einer weiteren aromatischen Di-und/oder Tricarbonsäure bzw. deren Anhydrid,
a2) mindestens einem Diol,
a3) ggf. weiteren Komponenten wie beispielsweise Triolen, Tetraolen, monofunktionellen Alkoholen, Monocarbonsäuren, Monoepoxiden, Bisepoxiden, Polyepoxiden, Lactonen und/oder aliphatischen bzw. cycloaliphatischen Di- oder Tricarbonsäuren bzw. deren Anhydriden,
   wobei der Anteil an Komponente a1) an der Menge der Komponente a1) bis a3) mindestens 38 Gew.-%, bevorzugt mindestens 52 Gew.- % beträgt.

Bevorzugte Polyesterkomponenten a) sind Polyester mit einer Hydroxylzahl von 10 bis 230, vorzugsweise von 48 bis 160 mg KOH/g Substanz, die Umsetzungsprodukte sind von
a1) 38 bis 72 Gew.-% einer Mischung aus Terephthalsäure und ggf. mindestens einer weiteren aromatischen Di- und/oder Tricarbonsäure bzw. deren Anhydrid,
a2 ) 20 bis 55 Gew. -% mindestens eines Diols,
a3) 0 bis 40 Gew. % weiterer Komponenten umfassend Triole, Tetraole, monofunktionelle Alkohole, Monocarbonsäuren, Monoepoxide, Bisepoxide, Polyepoxide, Lactone, aliphatische bzw. cycloaliphatische Di- oder Tricarbonsäuren bzw. deren Anhydriden,
   wobei in der eingesetzten Menge der Komponenten a1) mindestens 15 Gew.-%, bevorzugt mindestens 40% und besonders bevorzugt mindestens 48% Terephthalsäure enthalten ist.

Geeignete Verbindungen der Komponente a1) umfassen Terephthalsäure, Phthalsäureanhydrid, Isophthalsäure, Tetrachlorphthalsäure, Trimellithsäureanhydrid und Pyromellithsäureanhydrid.

Bevorzugte Verbindungen der Komponente a1) sind Terephthalsäure und Mischungen der Terephthalsäure mit Isophthalsäure und/oder Phthalsäureanhydrid. Es ist auch möglich anstelle der Terephthalsäure die entsprechenden C1-C4 Alkylester der Terephthalsäure einzusetzen.

Die Komponenten a1) besteht zu mindestens 15 Gew.-%, bevorzugt zu mindestens 40% und besonders bevorzugt zu mindestens 48% aus Terephthalsäure.

Geeignete Verbindungen der Komponente a2) umfassen Ethylenglykol, 1,2- Propandiol, 1,3-Propandiol, Neopentylglykol, 1,4-Butandiol, 1,3 Butandiol, 1,2-Butandiol, Butendiol, Butindiol, 1,6-Hexandiol, 1,4-Cyclohexandimethanol, 1,4-Cyclohexandiol, 2,2-Dimethyl-3-hydroxypropionsäure-(2,2-dimethyl-3-hydroxypropylester), Diethylenglykol, Dipropylenglykol, Triethylenglykol, Tripropylenglykol, Tetraethylenglykol, stellungsisomere Diethyloctandiole, hydrierte Bisphenole, hydrierte und ethoxylierte Bisphenole, ethoxyliertes Brenzkatechin, ethoxyliertes Resorcin, ethoxyliertes Hydrochinon, ethoxylierte und alkylsubstituierte Hydrochinone, Resorcine und Brenzkatechine, 2-Methy-1,3-propandiol, 3-Methyl-1,5-pentandiol, Trimethylpentandiol, 1,8-Octandiol und/oder Tricyclodecandimethanol und Mischungen der genannten und ggf. auch anderer Diole.

Bevorzugte Verbindungen der Komponente a2) sind Ethylenglykol, 1,2- bzw. 1,3-Propandiol, Neopentylglykol, 1,4-Butandiol und/oder 1,6-Hexandiol.

Ganz besonders bevorzugt als Komponente a2) sind Mischungen aus Neopentylglykol und Ethylenglykol

Geeignete, ggf. mit zu verwendenden Komponente a3) umfassen Rizinusöl, Trimethylopropan, Glycerin, Pentaerythrit, e-Caprolacton, Tetrahydrophthalsäureanhydrid, Hexahydrophthalsäureanhydrid, 1,4-Cyclohexandicarbonsäure, Adipinsäure, Azelainsäure, Sebacinsäure, Glutarsäure, Maleinsäure(anhydrid), Fumarsäure, Itaconsäure, Malonsäure, Korksäure, 2-Methylbemsteinsäure, 3,3-Diethylglutarsäure, 2,2-Dimethylbemsteinsäure, Dimerfettsäuren, Dimerfettsäuregemische, Monoepoxide wie z.B der Glycidylester der Versaticsäure, Bisepoxide wie beispielsweise epoxidierte Bisphenole, Polyepoxide, epoxidierte Fettsäuren bzw. Öle, Butylglykol, Butanol, Pentanol, 2-Ethylhexansäure, tert.-Butylbenzoesäure, Benzoesäure, Sojaölfettsäure, Ölsäure, Stearinsäure, C8- bis C30-Monocarbonsäuren bzw. deren Gemische. Ein geeigneter Polyesterrohstoff a3) ist auch Caprolacton, der anteilig zur Herstellung der Polyester a) eingesetzt werden kann.

Es ist auch möglich, amino- und/oder thiofunktionelle Verbindungen in Komponente a3) mit zu verwenden, wie beispielsweise Isophorondiamin, Hexamethylendiamin, Ethylendiamin, Butylamin, Diethanolamin, Diisopropanolamin und Diphenylmethyandiamine (MDA). Es ist auch möglich ethoxylierte bzw. propoxylierte Alkohole wie beispielsweise ethyoxyliertes Trimethylolpropan in Komponente a3) mit zu verwenden.

Die Säurezahl der entsprechenden Polyesterkomponente a) liegt üblicherweise bei 10 bis 0,1 mg KOH/g, bevorzugt bei 5 bis 0,5 mg KOH/g.

In Komponente a) können auch Mischungen aus zwei oder mehreren Polyester eingesetzt werden, wie beispielsweise Mischungen zweier Polyester, die Terephthalsäure enthalten; Mischungen eines Polyesters, der Terephthalsäure enthält, mit untergeordneten Mengen eines aromatisch/aliphatischen Polyesters, mit untergeordneten Mengen eines aliphatischen Polyesters, mit untergeordneten Mengen eines hydroxyfunktionellen aliphatischen Polycarbonats, oder/und mit untergeordneten Mengen eines hydroxyfunktionellen C2-, C3- und /oder C4-Polyether.

Die Komponente a) besteht bevorzugt zu mindestens 75 Gew. -%, besonders bevorzugt zu 100 Gew. -% aus einem Polyester, der Terephthalsäure enthält.

Die als Komponente a) eingesetzten Polyester weisen Schmelz- bzw. Erweichungstemperaturen von größer als -10°C, vorzugsweise von größer als 25°C und besonders bevorzugt von größer als 45°C auf.

Die Glasübergangstemperatur der als Komponente a) eingesetzten Polyester liegt bei > 5°C, vorzugsweise bei > 20°C.

Die als Komponente b) verwendeten isocyanatreaktiven Hydrophilierungsmittel bestehen aus mindestens einer (potentiell) ionischen Verbindung mit mindestens einer Säuregruppe und mindestens einer gegenüber Isocyanatgruppen reaktionsfähigen Gruppe. Geeignete Säuregruppen sind beispielsweise Carboxyl- und Sulphonsäuregruppen. Geeignete gegenüber Isocyanatgruppen reaktionsfähige Gruppen sind beispielsweise Hydroxyl- und/oder Aminogruppen.

Bevorzugte Komponente b) sind beispielsweise Di- und/oder Tri- und/oder Monohydroxycarbonsäuren und/oder Di- und/oder Tri- und/oder Monohydroxysulphonsäuren, bzw. Di- und/oder Tri- und/oder Monoaminosulphonsäuren und/oder Diund/oder Tri- und/oder Monoaminocarbonsäuren.

Besonders bevorzugte Komponenten b) sind beispielsweise Dimethylolpropionsäure, Dimethylolbuttersäure, Dimethylolessigsäure, Dihydroxybemsteinsäure, Hyxdroxypivalinsäure, Hydroxyessigsäure, Hydroxypropionsäure, Aminocarbonsäuren wie beispielsweise 6-Aminohexansäure, Alanin, Aminoundecansäure, 8-Aminooctansäure, 5-Aminopentansäure, 4-Amino-buttersäure, Aminobenzoesäure, 5-Aminonaphtalin-1-sulfonsäure, 4-Aminonaphtalin-1-sulfonsäure, 2-Aminonaphtalin-1-sulfonsäure, 5-Aminonaphtalin-2-sulfonsäure, 8-Aminonaphtalin-1-sulfonsäure, 3-Aminonaphtalin-2-sulfonsäure, 4-Aminomethylcyclohexancarbonsäure, 2-Aminohexansäure, 4-Aminocyclohexan-carbonsäure, 12-Aminododecansäure, 9-Aminoononacarbonsäure, Michael-Additionsprodukte von Acrylsäure, Methacrylsäure, Maleinsäure, Fumarsäure an Amine wie beispielsweise Isophorondiamin, Butandiamin, Ethylendiamin oder Hexamethylendiamin, Ethergruppen aufweisende Sulfonsäurediolen der in US-A 4 108 814 beschriebenen Art oder 2-Aminoethylaminoethansulphonsäure.

Ganz besonders bevorzugte Komponenten b) sind Hydroxypivalinsäure, 6-Aminohexansäure und Michael-Additionsprodukte von Acrylsäure, Methacrylsäure, Maleinsäure, Fumarsäure an Amine wie beispielsweise Isophorondiamin, Butandiamin, Ethylendiamin oder Hexamethylendiamin, Ethergruppen aufweisende Sulfonsäurediolen der in US-A 4 108 814 beschriebenen Art, Dimethylolpropionsäure und/oder 2-Aminoethyl-aminoethan-sulphonsäure.

Ein noch weiter bevorzugtes Hydrophilierungsmittel ist Hydroxypivalinsäure.

Ein noch weiter bevorzugtes Hydrophilierungsmittel ist ebenfalls 6-Aminohexansäure.

Bevorzugt ist auch die Kombination der bevorzugten isocyanatreaktiven Hydrophilierungsmittel b) mit anhydridfunktionellen Hydrophillerungsmitteln wie beispielsweise Trimellithsäureanhydrid, Phthalsäureanhydrid, Tetrahydrophthalsäureanhydrid, Maleinsäureanhydrid und/oder Hexahydrophthalsäureanhydrid.

Solche Anhydride können als Komponente e) eingesetzt werden, wobei es auch möglich ist, den überwiegenden Teil der Hydrophilierung über solche Anhydride einzubauen.

Diese duale Hydrophilierung führt zu besonders qualitativ hochwertigen Produkten und ermöglicht beispielsweise höhere Feststoffgehalte und führt insbesondere zu erfindungsgemäßen Polyurethan-Dispersionen mit besonders guten filmbildenden Eigenschaften, wie Verlauf und Fülle.

Komponente b) ist üblicherweise in Mengen von 0,7 bis 9 Gew.-%, vorzugsweise in Mengen von 1 bis 6 Gew.-% enthalten.

Besonders bevorzugt ist die Verwendung von 1,7 bis 3,4 Gew.-% Hydroxypivalinsäure als alleiniges Hydrophilierungsmittel

Die über die Komponente b) und ggf. Komponente e) eingebaute Säurezahlen der erfindungsgemäßen vemetzbaren Polyurethan-Dispersionen liegen bei 3,5 bis 40 mg KOH/g Substanz, vorzugsweise bei 3,5 bis 25 mg KOH/g Substanz.

Diese vergleichsweise niedrigen Säurezahlen wirken sich überraschenderweise positiv aus auf die filmoptischen Eigenschaften entsprechender Beschichtungen, wie beispielsweise Verlauf, Krateranfälligkeit und erzielbare Schichtstärke. Überraschenderweise können auch mit solch niedrigen Säurezahlen, stabile hochwertige Dispersionen erhalten werden, ohne dass externe Emulgatoren, Stabilisatoren bzw. oberflächenaktive Substanzen eingesetzt werden müssen.

Überraschend ist ebenfalls, dass trotz des Einbaus größerer Mengen der hydrophoben aromatischen Polyesterkomponente a) die erfindungsgemäßen vernetzbaren Polyurethan-Dispersionen bei relativ niedrigen Gehalten an hydrophilen Gruppen Teilchengrößen von unter 100 nm und gleichzeitig hohe Feststoffgehalte von bis zu 50% ermöglichen.

Die freien Säuregruppen stellen "potentiell ionischen" Gruppen dar, während es sich bei den durch Neutralisation mit Neutrallsationsmitteln erhaltenen salzartigen Gruppen, Carboxylat- bzw. Sulphonatgruppen, um "ionische" Gruppen handelt.

Geeignete Neutralisationsmittel, die bereits bei Umsetzung der Komponenten a) bis) d) bzw. ggf. e) zugegen sein können sind z. B. Triethylamin, N-Methylmorpholin, Dimethylisopropylamin, Ethyldüsopropylamin, ggf. auch Kaliumhydroxid und/oder Natriumhydroxid.

Dabei ist ggf. darauf zu achten, dass zu hohe Mengen an solchen Neutralisationsmitteln während der Umsetzung der Komponenten zu unerwünschten Nebenreaktionen, wie beispielsweise einer übermäßigen Trimerisierung der Komponente c) führen können.

Nach vollständiger Umsetzung der Komponenten a) bis d) bzw. ggf. e) können auch andere Neutralisationsmittel entweder vor, während oder auch nach dem Dispergieren zugegeben werden. An dieser Stelle geeignete Neutralisationsmittel neben den oben genannten sind beispielsweise Dimethylethanolamin, Ammoniak, Lithiumhydroxid, Morpholin, N-Methyl-diethanolamin, Aminomethylpropanol, Triethanolamin, Ethanolamin, Diethanolamin und/oder 2-Amino-2-methyl-1-propanol und/oder andere.

Insgesamt wird soviel Neutralisationsmittel zugegeben, dass der Neutralisationsgrad bezogen auf eingebaute Säuregruppen mindestens 50%, vorzugsweise mindestens 75% und maximal 150% beträgt. Bei einem Neutralisationsgrad von über 100% liegt dann neben 100% ionischen Salzgruppen noch zusätzlich freies Neutralisationsamin vor. Besonders bevorzugt ist ein Neutralisationsgrad von 95 bis 110 %.

Es können auch Mischungen bzw. Kombinationen unterschiedlicher Neutralisationsmittel eingesetzt werden.

Geeignete Komponenten c) sind beliebige organische Verbindungen, die mindestens zwei freie Isocyanatgruppen pro Molekül aufweisen.

Geeignet sind Diisocyanate der allgemeinen Formel X(NCO)2, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger Diisocyanate sind Tetramethylendiisocyanat, Methylpentamethylendiisocyanat, Hexamethylendiisocyanat, Dodecamethylendiisocyanat, 1,4-Diisocyanatocyclohexan, 1-lsocyanato-3,3,5-trimethyl-5-isocyanatomethylcyclohexan, 4,4'-Diisocyanatodicyclohexylmethan, 4,4'-Diisocyanatodicyclohexylpropan-(2,2), 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, p-Xylylendiisocyanat, p-Isopropylidendiisocyanat, sowie aus diesen Verbindungen bestehende Gemische.

Ebenfalls möglich ist der Einsatz von monomeren Triisocyanaten wie 4-lsocyanatomethyl-1,8-octandiisocyanat (Nonantriisocyanat).

Es ist ebenfalls möglich in untergeordneten Mengen Monoisocyanate wie beispielsweise Stearylisocyanat, Butylisocyanat, Cyclohexylisocyanat oder Benzylisocyanat mit zu verwenden.

Neben den vorgenannten monomeren Isocyanaten sind auch die an sich bekannten höhermolekularen Folgeprodukte dieser monomeren Isocyanate mit Uretdion-, Isocyanurat-, Urethan-, Allophanat-, Biuret-, Carbodiimid-, Iminooxadiazindion- und/oder Oxadiazintrionstruktur, wie sie in an sich bekannter Weise durch Modifizierung einfacher aliphatischer, cycloaliphatischer, araliphatischer und/oder aromatischer Diisocyanate erhältlich sind, geeignet.

Bevorzugt basieren die in c) eingesetzten Polyisocyanate auf Hexamethylendiisocyanat, Isophorondiisocyanat, 4,4'-Diisocyanatodicyclohexylmethan, 1-Methyl-2,4-diisocyanatocyclohexan, 1-Methyl-2,6-diisocyanatocyclohexan, 2,4-Diisocyanatotoluol und/oder 2,6-Diisocyanatotoluol.

Besonders bevorzugt wird in c) eine Polyisocyanatkomponente eingesetzt, die zu 62 bis 100 Gew.-% aus Hexamethylendiisocyanat und/oder Polyisocyanaten auf Basis von Hexamethylendiisocyanat mit Uretdion-, Isocyanurat-, Urethan-, Allophanat-, Biuret-, Carbodiimid-, Iminooxadiazindion- und/oder Oxadiazintrionstrukturen, und aus 0 bis 38 Gew.-% aus Isophorondiisocyanat, 4,4'-Diisocyanatodicyclohexylmethan, 1-Methyl-2,4-diisocyanatocyclohexan, 1-Methyl-2,6-diisocyanatocyclohexan, 2,4-Diisocyanatotoluol und/oder 2,6-Diisocyanatotoluol besteht.

Ganz besonders bevorzugt wird in c) eine Polyisocyanatkomponente eingesetzt, die zu 100 Gew.-% aus Hexamethylendiisocyanat und/oder Polyisocyanaten auf Basis von Hexamethylendiisocyanat mit Uretdion-, Isocyanurat-, Urethan-, Allophanat-, Biuret-, Carbodiimid-, Iminooxadiazindion- und/oder Oxadiazintrionstrukturen besteht.

Komponente c) wird üblicherweise in Mengen von 15 bis 60 Gew.-%, vorzugsweise in Mengen von 30 bis 50 Gew.-% eingesetzt.

Die Komponente d) kann ebenfalls beispielsweise aus der Gruppe bestehend aus Triazol, Dimethyltriazol, Dimethylpyrazol, tert.-Butyl-Benzylamin, Diisopropylamin, Butanonoxim, Epsilon-Caprolactam, Malonsäurediethylester, Malonsäuredimethylester, Acetessigester, Cyclopentanoncarboxyethylester, tert. Butyl-lsopropylamin, Dicyclohexylamin, Ethyl-Isopropylamin, Cyclohexanonoxim, Acetonoxim, Phenol, Dibutylamin, Cyclohexanol, Isopropanol und tert.-Butanol ausgewählt werden.

Die Komponenten d) können unter erhöhten Temperaturen von den erfindungsgemäßen Polyurethan-Dispersionen wieder abgespalten werden und erzeugen so freie Isocyanatgruppen, die mit geeigneten Reaktionspartnern Vernetzungsreaktionen eingehen können. Dadurch ist es möglich bei Umgebungstemperatur stabile Lacke, Beschichtungen und Klebstoffe zu formulieren, die während oder nach der Applikation durch Temperaturerhöhung vernetzten und zu hochwertigen Produkten aushärten.

Geeignete Aushärtungstemperaturen liegen üblicherweise bei 60 bis 240°C, vorzugsweise bei 90 bis 180°C. Ggf. kann durch Zugabe geeigneter Katalysatoren die Aushärtung beschleunigt, bzw. die Aushärtetemperatur gesenkt werden.

Es können auch Mischungen verschiedener Blockierungsmittel als Komponente d) eingesetzt werden, insbesondere Mischungen von Blockierungsmitteln, die bei unterschiedlichen Temperaturen deblockieren und so eine stufenweise Reaktion ermöglichen.

Bevorzugte Mischungen sind Mischungen aus Dimethylpyrazol und Triazol, Dimethylpyrazol und Butanonoxim, Dimethylpyrazol und Diisopropylamin, sowie Butanonoxim und Epsilon-Caprolactam.

Besonders bevorzugt wird die Komponenten d) ausgewählt aus der Gruppe bestehend aus Butanonoxim, Triazol, Diisopropylamin, Malonsäurester, Acetessigester, tert.-Butyl-Benzylamin und Dimethylpyrazol.

Die Komponente d) wird vorzugsweise in Mengen von 2 bis 30 Gew.-%, besonders bevorzugt von 4 bis 18 Gew.-% eingesetzt.

Sonstige Komponenten e) können beispielsweise sein:
e1) Säureanhydride wie Trimellithsäureanhydrid, Pyromellithsäureanhydrid, Phthalsäureanhydrid, Tetrahydrophthalsäureanhydrid, Hexahydrophthalsäureanhydrid, Maleinsäureanhydrid,
e2) nichtionisch hydrophilierend wirkende Komponenten wie beispielsweise Polyoxyalkylenether, die mindestens eine Hydroxy- oder Aminogruppe enthalten. Diese Polyether enthalten einen Anteil von 30 Gew. -% bis 100 Gew. -% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 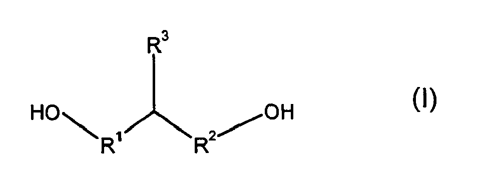 in welcher
   - R¹ und R²: unabhängig voneinander jeweils einen zweiwertigen aliphatischen, cyc- loaliphatischen oder aromatischen Rest mit 1 bis 18 C-Atomen, die durch Sauerstoff und/oder Stickstoffatome unterbrochen sein können, bedeuten und
   - R³: für einen alkoxyterminierten Polyethylenoxidrest steht.

Nichtionisch hydrophilierend wirkende Verbindungen sind beispielsweise auch einwertige, im statistischen Mittel 5 bis 70 Ethylenoxideinheiten pro Molekül aufweisende Polyalkylenoxidpolyetheralkohole, wie sie in an sich bekannter Weise durch Alkoxylierung geeigneter Startermoleküle zugänglich sind (beispielsweise in Ullmanns Encyclopädie der technischen Chemie, 4. Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl-und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonomethyl-, -monoethyl- bzw. -monobutylether als Startermolekül verwendet. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol -% bevorzugt zu mindestens 50 mol -% aus Ethylenoxideinheiten bestehen,
e3) Monoole, Diole, Triole, Tetraole wie beispielsweise Benzylalkohol, Stearylalkohol, 2-Ethylhexylalkohol, Oleylalkohol, Butylglykol, Butyldiglykol, Butandiol, Hexandiol, Neopentylglykol, Diethylenglykol, Triethylenglykol, Propylenglykol, Dipropylenglykol, Tetraethylenglykol und/oder Trimethylolpropan, Trimethylolpropan, Glycerin, Pentaerythrit, Dipentaerythrit, ethoxylierte und/oder propoxylierte Diole und/oder Triole beispielsweise auf Basis von Diethylenglykol oder Trimethylolpropan,
e4) Diamine, Triamine, Aminoalkohole wie beispielsweise Ethylendiamin, 1,3-Propylendiamin, 1,6-Hexamethylendiamin, 1,4-Butandiamin, Hydrazin(hydrat), aminofunktionelle Polyethylenoxide oder Polypropylenoxide, die beispielsweise unter dem Namen Jeffamin^{®}, (Fa. Huntsman Corp. Europe, Belgien) erhältlich sind, alkoxysilangruppenhaltige Mono- oder Diamine, Diethylentriamin, Monoamine wie beispielsweise Butylamin oder Diethylamin, Triethylentetramin, Isophorondiamin, Diethanolamin, Hydroxyethylethylendiamin, Diisopropanolamin, N-Methylethanolamin, N-Ethylethanolamin, N-Methyl-isopropanolamin, Bishydroxyethylethylendiamin und/oder Triethanolamin,
e5) Polyole mit mindestens zwei Hydroxylgruppen und Molekulargewichten von 400 bis 20 000 g/Mol, wie beispielsweise C2-, C3- und/oder C4-Polyether, Polycarbonate, Polymerisate, Rizinusöl, Alkydharze mit gesättigten oder ungesättigten Fettsäuren, ungesättigte Polyesterharze, ungesättigte Gruppen enthaltende, hydroxylfunktionelle Oligomere bzw. Polymere wie beispielsweise Epoxy(meth)acrylate, Ester(meth)acrylate, Polyester(meth)acrylate, Ether(meth)acrylate, Polyether(meth)acrylate, Urethan(meth)-acrylate,
e6) epoxyfunktionelle Verbindungen wie beispielsweise Bisphenol A Bisepoxid, Glycidylester der Versaticsäure, Glycidylmethacrylat, Epoxidharze und
e7) ungesättigte Verbindungen wie beispielsweise Hydroxyethyl(meth)acrylat, Hydroxypropyl(meth)acrylat, Hydroxybutyl(meth)acrylat, ethoxyliertes und/oder propoxyliertes Hydroxyethy(meth)acrylat, ethyoxyliertes und/oder propoxyliertes Hydroxypropyl(meth)acrylat, ethoxyliertes und/oder propoxyliertes Hydroxybutyl-(meth)acrylat, Trimethylopropanbisacrylat, Gylcerinbisacrylat, Pentaerythrit-trisacrylat, Umsetzungsprodukte aus Glycidylmethacrylat und Säuren wie beispielsweise Acrylsäure, Methacrylsäure, C4-C18 Monocarbonsäuren, Benzoesäure.

Werden als Komponente e) Diamine, Triamine und/oder Aminoalkohole eingesetzt, können diese Bestandteile als Kettenverlängerer für die zuvor hergestellten isocyanatfunktionellen und blockierte Isocyanatgruppen enthaltenden Polyurethane, erhalten aus den Komponenten a) bis d) und ggf. weiteren Komponenten e), wirken, und so das Molekulargewicht der vemetzbaren Polyurethan-Dispersionen erhöhen. Diese Kettenverlängerungsreaktion kann sowohl in organischer Phase vor dem Dispergierschritt, als auch nach dem Dispergierschritt, in der wässrigen Phase, erfolgen.

Besonders bevorzugte erfindungsgemäße vemetzbare Polyurethan-Dispersionen enthalten Umsetzungsprodukte aus
a) 30 bis 65 Gew.-% eines hydroxyfunktionellen aromatischen Polyesters mit einer mittleren OH-Funktionalität von 1,9 bis 2,75, einem Molekulargewicht Mw von 900 bis 3000 g/mol und einer Säurezahl von 0,5 bis 5 mg KOH/g, der das Umsetzungsprodukt ist aus
a1) 38 bis 72 Gew. -% Terephthalsäure und ggf. Isophthalsäure und/oder Phthalsäureanhydrid, wobei a1) zu mindestens 40 Gew.-% aus Terephthalsäure besteht,
a2) 20 bis 55 Gew. -% mindestens einer Verbindung ausgewählt aus der Gruppe bestehend aus Neopentylglykol, Ethylenglykol, Propylenglykol, Butandiol, Diethylenglykol und Hexandiol und
a3) 0 bis 10 Gew. -% mindestens einer Verbindung ausgewählt aus der Gruppe bestehend aus Adipinsäure, Rizinusöl, Glycerin und Trimethylolpropan,
b) 1 bis 6 Gew. -%Hydroxypivalinsäure,
c) 30 bis 50 Gew.-% mindestens eines, mindestens difunktionellen Polyisocyanats enthaltend Hexamethylendiisocyanat,
d) 4 bis 18 Gew.-% mindestens einer Verbindung ausgewählt aus der Gruppe bestehend aus Dimethylpyrazol, Butanonoxim und Caprolactam,
e) 0 bis 20 Gew.-% mindestens einer Verbindung ausgewählt aus der Gruppe bestehend aus Trimellithsäureanhydrid, monohydroxyfunktionelle hydrophile Polyether, hydroxyfunktionelle Polyester, hydroxyfunktionelle C2-, C3-, C4 Polyether, hydroxyfunktionelle Polycarbonate, Ethylendiamin, Isophorondiamin, Diethanolamin, N-Methylethanolamin, Hydroxyethylethylendiamin, Hydrazin, Hydrazinhydrat, Diethylentriamin, Stearylalkohol und Benzylalkohol,
   wobei sich die Prozentangaben a) bis e) bzw. a1) bis a3) jeweils zu 100% ergänzen.

Besonders bevorzugte erfindungsgemäße vernetzbare Polyurethan-Dispersionen enthalten Umsetzungsprodukte aus
a) 30 bis 65 Gew.-% eines hydroxyfunktionellen aromatischen Polyesters mit einer mittleren Funktionalität von 1,9 bis 2,75, einem Molekulargewicht Mw von 900 bis 3000 g/mol und einer Säurezahl von 0,5 bis 5 mg KOH/g Substanz, der das Umsetzungsprodukt ist aus
a1) 38 bis 72 Gew. -% Terephthalsäure und ggf. Isophthalsäure und/oder Phthalsäureanhydrid, wobei a1) zu mindestens 40 Gew.-% aus Terephthalsäure besteht,
a2) 20 bis 55 Gew. -% mindestens einer Verbindung ausgewählt aus der Gruppe bestehend aus Neopentylglykol, Ethylenglykol, Propylenglykol, Butandiol, Diethylenglykol und Hexandiol und
a3) 0 bis 10 Gew. -% mindestens einer Verbindung ausgewählt aus der Gruppe bestehend aus Adipinsäure, Rizinusöl, Glycerin und Trimethylolpropan,
b) 1 bis 6 Gew. -% Dimethylolpropionsäure,
c) 30 bis 50 Gew.-% mindestens eines, mindestens difunktionellen Polyisocyanats enthaltend Hexamethylendiisocyanat,
d) 4 bis 18 Gew.-% Butanonoxim und/oder Caprolactam,
e) 0 bis 20 Gew.-% mindestens einer Verbindung ausgewählt aus der Gruppe bestehend aus Trimellithsäureanhydrid, monohydroxyfunktionelle hydrophile Polyether, hydroxyfunktionelle Polyester, hydroxyfunktionelle C2-, C3-, C4 Polyether, hydroxyfunktionelle Polycarbonate, Ethylendiamin, Isophorondiamin, Diethanolamin, N-Methylethanolamin, Hydroxyethylethylendiamin, Hydrazin, Hydrazinhydrat, Diethylentriamin, Stearylalkohol und Benzylalkohol,
   wobei sich die Prozentangaben a) bis e) bzw. a1) bis a3) jeweils zu 100% ergänzen. Zur Herstellung der erfindungsgemäßen vernetzbaren Polyurethan-Dispersionen können verschiedene Verfahren eingesetzt werden.

In einem einstufigen Herstellverfahren werden die Komponenten a), b), d) und ggf. e) in einem Lösungsmittel vorgelegt. Bei 20 bis 100, vorzugsweise, 40 bis 70 °C wird, dann die Komponente c) zugegeben und ggf. unter Zugabe eines Katalysators solange gerührt, bis der gewünschte Isocyanatgehalt erreicht ist. Anschließendem werden ggf. (nochmals) Neutralisationsmittel und ggf. weitere organische Lösungsmittel und/oder Hilfsmittel zugesetzt und durch Zugabe von Wasser bzw. durch Überführen in eine vorgelegte wässrige Phase dispergiert bzw. gelöst, ggf. nachträglich (nochmals) Neutralisationsmittel und/oder Hilfsmittel zugesetzt und schließlich überschüssige Lösungsmittelmengen ggf. ganz oder teilweise destillativ abgetrennt.

Der Isocyanatgehalt nach der Umsetzung der Komponenten liegt bei < 2,5%, vorzugsweise bei < 1,0 % und besonders bevorzugt bei < 0,1 %.

Die Umsetzung der Komponenten a), b), c) d) und gegebenenfalls e) kann mit oder ohne Zusatz von katalytisch wirkenden Substanzen durchgeführt werden. Geeignete Katalysatoren sind die in der Polyurethanchemie gebräuchlichen Metallkatalysatoren wie beispielsweise Zinnverbindungen wie Dibutylzinndilaurat, Formrez^{®} UL 29 (Zinnkatalysator; Witco, USA), Butylzinnoxid, Dibutylzinnoxid, Fascat^{®} 4100 (Zinnkatalysator, Arkema, France), Zinnchlorid, Zinn-II-oktoat oder Wismutoktoat, Phenylquecksilberacetat, ebenfalls geeignet sind Aminkatalysatoren wie beispielsweise Triethylamin, Dimethylcyclohexylamin, Diazabicyclononen, Diazabicyclooctan, Diazabicycloundecen und/oder Dimethylaminopyridin. Bevorzugt erfolgt die Umsetzung in Gegenwart von Katalysatoren. Besonders bevorzugt ist der Einsatz von 25 bis 250 ppm Katalysatoren bezogen auf die Mengen der Komponenten a), b), c),d) und ggf. e).

Geeignete Lösungsmittel sind prinzipiell alle nicht isocyanatreaktiven Lösungsmittel, vorzugsweise Aceton, Methylethylketon, Methylisobutylketon, Solvent Naphta, Toluol, Xylol, ,Cyclohexan, Methoxypropylacetat, N-Methylpyrrolidon, N-Ethylpyrrolidon, Diethylenglykoldimethylether, Dipropylenglykol-dimethylether, Ethylenglykoldimethylether oder Tetramethoxymethan. Nach der Umsetzung der Komponenten können auch hydroxyfunktionelle Lösungsmittel zugesetzt werden, wie beispielsweise Butylglykol, Butyldiglykol, Methyoxypropanol, Ethoxypropanol, Ethylenglykol und/oder Propylenglykol.

Besonders bevorzugt ist die Verwendung von Aceton, ggf. auch in Kombination, mit anderen Lösungsmitteln.

Ganz besonders bevorzugt ist die ausschließliche Verwendung von Aceton, in Mengen von 5 bis 65, vorzugsweise von 10 bis 35 Gew. %.

Die pH-Werte der erfindungsgemäßen Polyurethan-Dispersionen liegen zwischen 6 und 11, bevorzugt zwischen 6,5 bis 9,5.

Die erfindungsgemäßen Polyurethan-Dispersionen können ebenfalls in einem zweistufigen Herstellverfahren hergestellt werden, wobei zunächst ein isocyanatfunktionelles Zwischenprodukt durch Umsetzung der Komponenten a), b), c) und ggf. e) ggf. in Lösungsmittel und ggf. in Anwesenheit geeigneter Katalysatoren hergestellt wird und dieses dann mit dem Blockierungsmittel d) zur Reaktion gebracht wird, wobei anschließend ggf. weitere Lösungsmittel und/oder Neutralisationsmittel zugegeben werden und durch Zugabe von Wasser zur Polymerlösung oder durch Zugabe der Polymerlösung zu Wasser dispergiert und ggf. nachträglich (nochmals) Neutralisationsmittel und/oder Hilfsmittel zugesetzt und schließlich ggf. überschüssige Lösungsmittelmengen ganz oder teilweise destillativ abgetrennt werden.

Die erfindungsgemäßen Polyurethan-Dispersionen können ebenfalls in einem dreistufigen Herstellverfahren hergestellt werden, wobei zunächst ein isocyanatfunktionelles Zwischenprodukt durch Umsetzung der Komponenten a), b), c) und ggf. e) ggf. in Lösungsmittel und ggf. in Anwesenheit geeigneter Katalysatoren hergestellt wird, dieses dann mit dem Blockierungsmittel d) derart zur Reaktion gebracht wird, dass noch eine bestimmte Menge an Isocyanatgruppen für weitere Reaktionen zur Verfügung steht, anschließend ggf. weitere Lösungsmittel und/oder Neutralisationsmittel zugegeben werden und durch Zugabe von Wasser zur Polymerlösung oder durch Zugabe der Polymerlösung zu Wasser dispergiert und ggf. nachträglich (nochmals) Neutralisationsmittel und/oder Hilfsmittel zugesetzt werden, wobei vor oder nach dem Dispergierschritt eine Kettenverlängerungsreaktion mit mindestens einer aminofunktionellen Komponenten e) durchgeführt wird und schließlich ggf. überschüssige Lösungsmittelmengen ganz oder teilweise destillativ abgetrennt werden.

Die erfindungsgemäßen Polyurethan-Dispersionen können ebenfalls in einem mehrstufigen Herstellverfahren hergestellt werden, wobei zunächst in einem ersten Reaktionsschritt ein isocyanatfunktionelles Zwischenprodukt durch Umsetzung der Komponenten a), c) und ggf. d) und ggf. e) ggf. in Lösungsmittel und ggf. in Anwesenheit geeigneter Katalysatoren hergestellt wird und dieses dann in einem zweiten Reaktionsschritt mit Komponente b) umgesetzt wird und ggf. in einem weiteren Reaktionsschritt, falls dies nicht bereits im ersten Reaktionsschritt erfolgt ist, mit dem Blockierungsmittel d) zur Reaktion gebracht wird, wobei anschließend ggf. weitere Lösungsmittel und/oder Neutralisationsmittel zugegeben werden und durch Zugabe von Wasser zur Polymerlösung oder durch Zugabe der Polymerlösung zu Wasser dispergiert und ggf. nachträglich (nochmals) Neutralisationsmittel und/oder Hilfsmittel zugesetzt und schließlich ggf. überschüssige Lösungsmittelmengen ganz oder teilweise destillativ abgetrennt werden.

Es ist ebenfalls möglich, die erfindungsgemäßen vemetzbaren PolyurethanDispersionen so herzustellen, dass sie neben den blockierten Isocyanatgruppen außerdem noch freie Hydroxylgruppen aufweisen. Dies ist beispielsweise in der Art möglich, dass Komponente a), b) c) und d) so miteinander umgesetzt werden, dass noch freie Isocyanatgruppen für weitere Reaktionen zu Verfügung stehen, die dann in einem weiteren Reaktionsschritt mit einem Überschuss an hydroxyfunktionellen und/oder amino- und hydroxyfunktionellen Komponenten e) umgesetzt werden. Anschließend erfolgt dann wie bereits vorstehend beschrieben Neutralisation, Dispergierung und ggf. destillativem Entfernen des Lösungsmittels.

Daraus resultieren dann erfindungsgemäße vernetzbare Polyurethan-Dispersionen, die neben blockierten Isocyanatgruppen noch freie Hydroxylgruppen aufweisen und somit nach der Applikation und nach Deblockierung der blockierten Isocyanatgruppen bei erhöhter Temperatur mit sich selbst vernetzen können, ohne dass weitere Komponenten zwingend notwendig wären.

Die erfindungsgemäßen vemetzbaren Polyurethan-Dispersionen die neben den blockierten lsocyanatgruppen ausserdem noch freie Hydroxylgruppen aufweisen, werden bevorzugt in der Art und Wiese erhalten, dass Komponente a), b) c) und d) so miteinander umgesetzt werden, dass noch freie lsocyanatgruppen für weitere Reaktionen zu Verfügung stehen, die dann in einem weiteren Reaktionsschritt mit mindestens einer amino- und hydroxyfunktionellen Komponenten e) derart umgesetzt werden, das für jede freie Isocyanatgruppe jeweils 0,9 bis 1,1 Moleküle Komponenten e) mit einer Aminogruppe und einer oder zwei Hydroxygruppen eingesetzt wird. Anschließend erfolgt dann wie bereits vorstehend beschrieben Neutralisation, Dispergierung und ggf. destillatives Entfernen des Lösungsmittels.

Die erfindungsgemäßen reaktiven Polyurethan-Dispersionen enthalten bevorzugt maximal 8, besonderes bevorzugt maximal 3 Gew.-% und ganz bevorzugt weniger als 1 Gew. -% organische Lösungsmittel. Die ggf. durchgeführte destillative Entfernung überschüssiger Lösungsmittelmengen kann beispielsweise unter reduziertem Druck bei beispielsweise 20 bis 80°C während oder nach dem Dispergieren in/mit destilliertem Wasser erfolgen.

Der Festkörpergehalt der erfindungsgemäßen Polyurethan-Dispersionen liegt bei 30 bis 65 Gew. -%, vorzugsweise bei 35 bis 55 Gew.-%.

Die erfindungsgemäßen Polyurethan-Dispersionen weisen Teilchendurchmesser, bestimmt z. B. durch LKS-Messungen, von bevorzugt 25 bis 500, besonders bevorzugt von 25 bis 160 nm auf.

Die erfindungsgemäßen vemetzbaren Polyurethan-Dispersionen können alleine, vorzugsweise aber in Kombination mit anderen ionisch oder nichtionisch hydrophilierten wässrigen Dispersionen, Lösungen, Emulsionen und/oder Suspensionen bzw. wasserverdünnbaren, wasserdispergierbaren und/oder wasserlöslichen Polymeren, Oligomeren und/oder Monomeren gemischt und gemeinsam eingesetzt werden. Solche Bindemittelkombinationen sind bei Umgebungstemperatur lagerstabil und können bei erhöhter Temperatur zur Reaktion gebracht werden um vernetzte Polymere zu erzeugen.

Gegenstand der Erfindung sind somit ebenfalls lagerstabile wässrige Bindemittelkombinationen, enthaltend
A) mindestens eine wässrige Dispersion, Lösung, Emulsion und/oder Suspension eines Polymeren bzw. Oligomeren, bzw. mindestens ein wasserverdünnbares, wasserdispergierbares und oder wasserlösliches Polymer und/oder Oligomer und/oder Monomer und
B) mindestens eine erfindungsgemäße vemetzbare Polyurethan-Dispersion.

Gegenstand der Erfindung sind ebenfalls lagerstabile wässrige Bindemittelkombinationen, enthaltend
A) 40 bis 98 Gew.-% mindestens einer wässrige Dispersion, Lösung, Emulsion und/oder Suspension eines hydroxyfunktionellen Polymeren bzw. Oligomeren, bzw. mindestens eines wässrigen bzw. wasserverdünnbaren bzw. wasserdispergierbaren hydroxyfunktionellen Polymer und/oder Oligomer und/oder Monomer,
B) 2 bis 60 Gew.-% mindestens einer erfindungsgemäßen vemetzbaren Polyurethan-Dispersion.

Prinzipiell als Komponente A) geeignete Polymere, Oligomere bzw. Monomere sind z. B. Polyvinylacetate, Polyethylene, Polystyrole, Polybutadiene, Polyvinylchloride, Polyether, Polyurethane, Polyurethan-Polyhamstoffe, Polyharnstoffe, Polyester, Alkyde, ungesättigte Polyester, Epoxide , Polyepoxide, Polyacrylate und/oder Copolymerisate in 100%iger, in gelöster oder in dispergierter Form, insbesondere in Form von wässrigen Dispersionen, Lösungen, Emulsionen und/oder Suspensionen.

Bei solchen Mischungen ist jeweils die Verträglichkeit zu prüfen, wobei sich die erfindungsgemäßen Dispersionen durch eine sehr gute Verträglichkeit mit unterschiedlichsten wässrigen Dispersionen, Lösungen, Emulsionen und/oder Suspensionen auszeichnen.

Vorzugsweise werden als Komponente A) hydroxyfunktionelle Polymere bzw. Oligomere in Form von wässrigen Dispersionen, Emulsionen und/oder Lösungen bzw. in wasserverdünnbarer oder wasserdispergierbarer Form eingesetzt.

Bevorzugte Polymere A) sind hydroxyfunktionelle Polyester, Polyurethane, Polyether, Polyester-Polyurethane, Polyether-Polyurethane, Polycarbonate, Polyurethanpolycarbonate, Polyurethan-Polyharnstoffe, Alkydharze und/oder Polyacrylate in wässriger Lösung, Dispersion und/oder Emulsion.

Vorzugsweise weisen die Polymeren A) Hydroxylgruppengehalte (bezogen auf Feststoffgehalt) von 0,3 bis 8, besonders bevorzugt von 0,75 bis 4 Gew,% auf.

Es ist ebenfalls möglich als Komponente A) aminofunktionelle Polymere, Oligomere oder Monomere einzusetzen. Solche Bindemittelkombinationen können dann auch bei niedrigeren Temperaturen ausgehärtet werden, beispielsweise bei 40 bis 80°C. Es resultieren dann über Harnstoffgruppen vernetzte Polymere. Die Verarbeitungszeit solcher Bindemittelkombinationen ist dabei naturgemäß eingeschränkt und kürzer als bei der Verwendung von hydoxyfunktionellen Komponenten A).

Gegenstand der Erfindung sind daher ebenfalls Bindemittelkombinationen enthaltend
A)3 bis 70 Gew.-% mindestens einer wässrige Dispersion, Lösung, Emulsion und/oder Suspension eines aminofunktionellen Polymeren bzw. Oligomeren, bzw. mindestens eines wässrigen bzw. wasserverdünnbaren bzw. wasserdispergierbaren aminofunktionellen Polymer und/oder Oligomer und/oder Monomer,
B) 30 bis 97 Gew.-% mindestens einer erfindungsgemäßen vemetzbaren Polyurethan-Dispersion.

Es ist ebenfalls möglich, Bindemittelkombinationen auf Basis der erfindungsgemäßen vernetzbaren Polyurethan-Dispersionen B) einzusetzen, die neben mindestens einer Komponente A) eine oder mehrere weitere Komponenten C) enthalten.

Geeignete Komponenten C) können sein: Vernetzungsmittel wie Carbodiimide, Polyisocyanate mit freien Isocyanatgruppen, blockierte Polyisocyanate, Aminovernetzerharze wie beispielsweise teilweise oder ganz veretherte Melaminharze bzw. Hamstoff-Formaldehyd-Kondensationsprodukte bzw. vernetzende Aminoplastharze wie sie beispielsweise in "Methoden der organischen Chemie" Houben-Weyl, Bd. 14/2, Teil 2, 4. Auflage, Georg Thieme Verlag Stuttgart, 1963, s.319 ff, beschrieben sind.

Geeignete blockiert Polyisocyanate C) sind beispielsweise Umsetzungsprodukte von difunktionellen Isocyanaten wie beispielsweise lsophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane und/oder Allophanate mit Blockierungsmittel wie beispielsweise Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin.

Die genannten blockierten Polyisocyanate können auch durch Einbau hydrophiler Gruppen, wie beispielsweise Carboxylat-, Sulphonat- und/oder Polyethylenoxidstrukturen in eine wasserdispergierbare Form überführt werden und so in Kombination mit den erfindungsgemäßen Dispersionen eingesetzt werden.

Bevorzugte Komponenten C) sind Aminovemetzerharze wie beispielsweise teilweise oder ganz veretherte Melaminharze bzw. Hamstoff-Formaldehyd-Kondensationsprodukte bzw. vernetzende Aminoplastharze wie sie beispielsweise in "Methoden der organischen Chemie" Houben-Weyl, Bd. 14/2, Teil 2, 4. Auflage, Georg Thieme Verlag Stuttgart, 1963, s.319 ff, beschrieben sind.

Gegenstand der Erfindung sind daher ebenfalls Bindemittelkombinationen, enthaltend
A) 20 bis 98 Gew.-% mindestens einer wässrige Dispersion, Lösung, Emulsion und/oder Suspension eines hydroxyfunktionellen Polymeren bzw. Oligomeren, bzw. mindestens eines wässrigen bzw. wasserverdünnbaren bzw. wasserdispergierbaren hydroxyfunktionellen Polymer und/oder Oligomer und/oder Monomer,
B) 2 bis 50 Gew.-% mindestens einer erfindungsgemäßen vemetzbaren Polyurethan-Dispersion,
C) 0,5 bis 25 Gew.-% mindestens eines Aminovemetzerharzes und/oder eines blockierten Polyisocyanates

Zur erfindungsgemäßen Verwendung der erfindungsgemäßen PolyurethanDispersionen können diesen die üblichen Hilfs- und Zusatzmittel zugesetzt werden. Hierzu gehören beispielsweise organische und /oder anorganische Pigmente bzw. Metallic-Pigmente auf der Basis von Aluminiumflocken; Füllstoffe wie beispielsweise Ruß, Kieselsäure, Talkum, Kaolin, Glas als Pulver oder in Form von Fasern, Cellulose und Mischungen dieser und/oder anderer für die Herstellung von Lacken, Beschichtungen und Klebstoffen gebräuchlichen Materialien.

Die auf Basis der erfindungsgemäßen vemetzbaren Polyurethan-Dispersionen hergestellten Bindemittelkombinationen werden vorzugsweise für Einbrennlacke und - beschichtungen, die bei Temperaturen von 90 bis 240, vorzugsweise von 90° bis 180°C °C ausgehärtet werden, verwendet.

Mögliche Anwendungsgebiete sind die Beschichtung, Behandeln, Lackierung von Glas, Glasfasern, metallischen Untergründen aller Art, keramischen Materialien, Kunststoffen aller Art, Stein, Beton, Porzellan, Textilien, Leder, Bitumen, Hartfaser, Holz, Holzwerkstoffen und Verbundwerkstoffen bzw.-materialien

Bevorzugte Anwendungsgebiete sind beispielsweise Einbrennfüllerlackierungen, Einschichtlacke, Steinschlagschutzgrundierungen, Grundierungen, Klarlacke, pigmentierte Decklacke, dekorative Beschichtungen, Korrosionsschutzlackierungen, Glasfaserschlichten,

Es werden damit vorzugsweise hochwertige Lacke und Beschichtungen mit hoher Filmhärte und gleichzeitig hoher Elastizität, guter Filmoptik und Lösungsmittel- bzw. Chemikalienbeständigkeit und sehr guter Haftung auf unterschiedlichen Substraten erhalten, die darüber hinaus nach Trocknung bei Raumtemperatur klebfreie und damit beispielsweise für Staub unempfindliche Filme ermöglichen.

Die Herstellung der erfindungsgemäßen Bindemittelkombinationen erfolgt in der Regel durch Mischen der fertigen erfindungsgemäßen Polyurethan-Dispersion mit einer oder mehreren der beschrieben Komponenten A) und ggf. C).

Zur Erzellung besonderer Effekte ist es auch möglich, geringe Mengen an in der Lack- und Klebstoffindustrie üblichen Hilfsmitteln bei der Herstellung der erfindungsgemäßen Polyurethan-Dispersionen zuzusetzen, wie beispielsweise oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker und/oder Bakterizide.

### Beispiele:

### Aromatischer Terephthalsäure-Polyester A)

4784 g Terephthalsäure, 4784 g Isophthalsäure, 3460 g Neopentylglykol, 2274 g Ethylenglykol und 267 g Rizinusöl werden in ein Veresterungsgefäß eingewogen, und unter Überleiten von Stickstoff auf 140°C aufgeheizt. Unter Rühren wird dann stufenweise (10°C/Stunde) auf die Reaktionstemperatur von 210°C erhitzt und 4 Stunden bei dieser Temperatur verestert, anschließend wird auf 230°C erhitzt und solange unter Stickstoff- Atmosphäre verestert bis eine Säurezahl von 3 mg KOH/g Substanz erreicht ist. Dann wird der Polyester abgekühlt und abgefüllt. Der 100%-ige aromatische Terephthalsäure-Polyester A) hat ein Hydroxylequivalentgewicht von 623 g/ mol.

### Polyurethan-Dispersion 1)

473,5 g Polyester A) und 22,4 g Hydroxypivalinsäure werden in 386 heißem Aceton gelöst und dann mit 73 g Dimethylpyrazol versetzt. Anschließend werden unter Rühren bei 45 °C 333,5 g Desmodur® N 3300 (aliphatisches Polyisocyanat mit Isocyanuratstrukureinheiten auf Basis Hexamethylendiisocyanat; Isocyanatequivalentgewicht 195 g/Mol, Bayer MaterialScience AG, Leverkusen, Deutschland) zugegeben, der Ansatz mit 150 ppm Desmorapid® SO (Zinnkatalysator Bayer MateriatScience AG, Leverkusen, Deutschland) versetzt, und bei 50°C solange gerührt, bis der lsocyanatgehalt < 0,1% beträgt. Nach Zugabe von 16,9 g Dimethylethanolamin wird durch Zugabe von 1350 g destilliertem Wasser dispergiert und das Aceton im leichten Vakuum abdestilliert. Man erhält eine vernetzbare, Lösungsmittelfreie, blockierte Isocyanatgruppen enthaltende Polyurethan-Dispersion 1) mit einem Festkörpergehalt von 40 %, einem pH-Wert von 8,1, einer Viskosität von 22 mPAs/23°C und einer mittleren Teilchengröße von 70 nm.

### Polyurethan-Dispersion 2)

320,3 g Polyester A), 14,9 g Hydroxypivalinsäure und 41,7 g Dimethylpyrazol werden unter Rühren in 304g heißem Aceton gelöst. Anschließend werden unter Rühren 150 ppm Desmorapid® SO und dann bei 45 °C eine Mischung aus 163,8 g Desmodur® N 3300 und 23,5 g Hexamethylendiisocyanat zugegeben und der Ansatz bei 55°C solange gerührt, bis der Isocyanatgehalt 0,1% beträgt. Nach Zugabe von 11,2 g Dimethylethanolamin wird durch Zugabe von 700 g destilliertem Wasser dispergiert und das Aceton im leichten Vakuum abdestilliert. Man erhält eine vernetzbare, blockierte Isocyanatgruppen enthaltende Polyurethan-Dispersion 2) mit einem Festkörpergehalt von 47 %, einem pH-Wert von 8,1, einer Viskosität von 34 mPAs/23°C und einer mittleren Teilchengröße von 99 nm.

### Polyurethan-Dispersion 3)

377,5 g Polyester A), 24,7 g Hydroxypivalinsäure und 91,3 g Dimethylpyrazol werden unter Rühren in 193 g heißem Aceton gelöst. Anschließend werden unter Rühren 250 ppm Desmorapid® SO und dann bei 45 °C eine Mischung aus 214,5 g Desmodur® N 3300 und 62,8 g Hexamethylendiisocyanat zugegeben und der Ansatz bei 50°C solange gerührt, bis der lsocyanatgehalt < 0,1 % beträgt. Nach Zugabe von 18,6 g Dimethylethanolamin wird durch Zugabe von 790 g destilliertem Wasser dispergiert und das Aceton im leichten Vakuum abdestilliert. Man erhält eine vernetzbare, blockierte Isocyanatgruppen enthaltende Polyurethan-Dispersion 3) mit einem Festkörpergehalt von 49 %, einem pH-Wert von 8,1, einer Viskosität von 74 mPAs/23°C und einer mittleren Teilchengröße von 71 nm.

### Polyurethan-Dispersion 4)

263,1 g Polyester A), 27,8 g Hydroxypivalinsäure und 115,9 g Dimethylpyrazol werden unter Rühren in 242 g heißem Aceton gelöst. Anschließend werden unter Rühren 150 ppm Desmorapid® SO und dann bei 45 °C eine Mischung aus 273,6 g Desmodur® N 3300 und 44,4 g Hexamethylendiisocyanat zugegeben und der Ansatz bei 50°C solange gerührt, bis der lsocyanatgehalt < 0,1% beträgt. Nach Zugabe von 21 g Dimethylethanolamin wird durch Zugabe von 700 g destilliertem Wasser dispergiert und das Aceton im leichten Vakuum abdestilliert. Man erhält eine vernetzbare, blockierte Isocyanatgruppen enthaltende Polyurethan-Dispersion 4) mit einem Festkörpergehalt von 52 %, einem pH-Wert von 8,1, einer Viskosität von 115 mPAs/23°C und einer mittleren Teilchengröße von 69 nm.

### Polyurethan-Dispersion 5)

366,1 g Polyester A), 18,9 g Hydroxypivalinsäure, 21,5 g Trimethylolpropan und 30,7 g Dimethylpyrazol werden unter Rühren in 251 g heißem Aceton gelöst. Anschließend werden unter Rühren 250 ppm Desmorapid® SO und dann bei 45 °C 147,8 g Hexamethylendiisocyanat zugegeben und der Ansatz bei 58°C solange gerührt, bis der lsocyanatgehalt 0,8% beträgt. Anschließend werden 3,7 g Ethylendiamin, gelöst in 10 g Wasser zugegeben und 15 Minuten gerührt. Dann wird mit 14,2 g Dimethylethanolamin neutralisiert, durch Zugabe von 1050 g destilliertem Wasser dispergiert und das Aceton im leichten Vakuum abdestilliert. Man erhält eine kettenverlängerte, vernetzbare, blockierte Isocyanatgruppen enthaltende PolyurethanDispersion 5) mit einem Festkörpergehalt von 40 %, einem pH-Wert von 7,9, einer Viskosität von 44 mPAs/23°C und einer mittleren Teilchengröße von 87 nm.

### Polyurethan-Dispersion 6)

450,5 g Polyester A), 31 g Hydroxypivalinsäure, 28,2 g Trimethylolpropan und 60,5 g Dimethylpyrazol werden unter Rühren in 328 g heißem Aceton gelöst. Anschließend werden unter Rühren 150 ppm Desmorapid® SO und dann bei 45 °C 194 g Hexamethylendiisocyanat zugegeben und der Ansatz bei 50°C solange gerührt, bis der Isocyanatgehalt < 0,1% beträgt. Dann wird mit 23,4 g Dimethylethanolamin neutralisiert, durch Zugabe von 1350 g destilliertem Wasser dispergiert und das Aceton im leichten Vakuum abdestilliert. Man erhält eine vernetzbare, blockierte Isocyanatgruppen enthaltende Polyurethan-Dispersion 6) mit einem Festkörpergehalt von 46 %, einem pH-Wert von 7,9, einer Viskosität von 78 mPAs/23°C und einer mittleren Teilchengröße von 45 nm.

### Polyurethan-Dispersion 7)

355 g Polyester A), 11,8 g Hydroxypivalinsäure und 84,5 g Dimethylpyrazol werden unter Rühren in 200 g heißem Aceton gelöst. Anschließend werden unter Rühren 250 ppm Desmorapid® SO und dann bei 45 °C eine Mischung aus 42 g Hexamethylendiisocyanat, 22,2 g isophorondiisocyanat und 191,1 g Desmodur N® 3300 zugegeben und der Ansatz bei 50°C solange gerührt, bis der Isocyanatgehalt 0,4% beträgt. Dann werden 11,5 g Trimellithsäureanhydrid zugegeben und bei 50°C solange gerührt, bis im IR Spektrum keine Anhydridbanden mehr nachweisbar sind. Dann wird mit 17,6 g Dimethylethanolamin neutralisiert, durch Zugabe von 880 g destilliertem Wasser dispergiert und das Aceton im leichten Vakuum abdestilliert. Man erhält eine dual hydrophilierte, vernetzbare, blockierte Isocyanatgruppen enthaltende Polyurethan-Dispersion 7) mit einem Festkörpergehalt von 47 %, einem pH-Wert von 7,9, einer Viskosität von 80 mPAs/23°C und einer mittleren Teilchengröße von 91 nm.

### Polyurethan-Dispersion 8)

305 g Polyester A), 36,2 g Dimethylolpropionsäure und 65,8 g Dimethylpyrazol werden unter Rühren in 200 g heißem Aceton gelöst. Anschließend werden unter Rühren 0,1g Desmorapid® SO und dann bei 45 °C eine Mischung aus 132,3 g Hexamethylendiisocyanat und 58,3 g Isophorondiisocyanat zugegeben und der Ansatz bei 50°C solange gerührt, bis der Isocyanatgehalt 1,9% % beträgt. Dann werden 15,3 g Diethylentriamin, verdünnt mit 15 g Aceton zugegeben bei 50°C solange gerührt bis der Isocyanatgehalt < 0, 1 % beträgt. Dann wird mit 24 g Dimethylethanolamin neutralisiert, durch Zugabe von 890 g destilliertem Wasser dispergiert und das Aceton im leichten Vakuum abdestilliert. Man erhält eine kettenverlängerte, vernetzbare, blockierte Isocyanatgruppen enthaltende Polyurethan-Dispersion 8) mit einem Festkörpergehalt von 41 %, einem pH-Wert von 9,1, einer Viskosität von 600 mPAs/23°C und einer mittleren Teilchengröße von 130 nm.

### Polyurethan-Dispersion 9)

268,4 g Polyester A), 25,1 g Dimethylolpropionsäure, 4,1 g Stearylakohol, und 56,2 g Dimethylpyrazol werden unter Rühren in 220 g heißem Aceton gelöst. Anschließend werden unter Rühren 0,1g Desmorapid® SO und dann bei 45 °C eine Mischung aus 63 g Hexamethylendiisocyanat, 16,7 g Isophorondiisocyanat und 87,8 Desmodur® N3300 zugegeben und der Ansatz bei 50°C solange gerührt, bis der Isocyanatgehalt <0,1% % beträgt. Dann wird mit 16,7 g Dimethylethanolamin neutralisiert, durch Zugabe von 780 g destilliertem Wasser dispergiert und das Aceton im leichten Vakuum abdestilliert. Man erhält eine vernetzbare, blockierte lsocyanatgruppen enthaltende Polyurethan-Dispersion 9) mit einem Festkörpergehalt von 38 %, einem pH-Wert von 8, einer Viskosität von 500 mPAs/23°C und einer mittleren Teilchengröße von 64 nm.

### Vergleichs-Dispersion 10)

Zum Vergleich wurde Bespiel 5 aus EP 1862486 nachgestellt. Diese PolyurethanDispersion enthält ein Umsetzungsprodukt aus Desmodur® N3300, Dimethylpyrazol, Trimethylolpropan und Hydroxypivalinsäure.

Die erfindungsgemäßen, vernetzbaren Polyurethan-Dispersionen 8) und 9) wurden im Vergleich zur Vergleichs-Dispersion 10) in Kombination mit einer hydroxyfunktionellen Polyester-Polyurethan-Dispersion als Einbrennlack geprüft. Die Mengenverhältnisse wurden so gewählt, dass das Verhältnis von blockierten Isocyanatgruppen zu Hydroxylgruppen 1:1 betrug.

| | | **Beispiel 9** | **Beispiel 8** | **Vergleich 10** |
|---|---|---|---|---|
| Bindemittelverhältnis | | NCO:OH = 1,0 | | |
| Polyurethan-Dispersion 9) | | 123,5 | | |
| Polyurethan-Dispersion 8) | | | 116,2 | |
| Vergleichsbeispiel 11) | | | | 68,6 |
| OH-Dispersion Bayhydrol PT 241 ¹⁾ | OH-Dispersion Bayhydrol | 80,0 | 80,0 | 100,0 |
| Additol XW 395, Lff. | | 1,4 | 1,4 | 1,2 |
| urfynol 104E, Lff | | 1,4 | | 1,4 1,2 |
| | DMEA, 10% in Wasser 1,0 | | | |
| dest. Wasser | | 12,3 | 13,0 | 13,0 |
| | **Gesamtmenge in g** | **218,6** | **212,0** | **185,0** |
| Viskosität: Auslaufzeit DIN ISO 5 | sofort [s] | 41 | 38 | 39 |
| | nach Lagerung für 10 Tage bei 40°C [s] | 31 | 28 | 29 |
| pH-Wert im Lack | | 8,1 | 8,1 | 8,1 |
| Festkörper im Lack | | 37% | 38% | 37% |
| Einbrennbedingung: | | 10'RT + 30' 120°C | | |

| Aussehen Lackfilm | | in Ordnung | in Ordnung | in Ordnung |
|---|---|---|---|---|
| Pendelhärte nach DIN 53157 | [s] | 153 | 153 | 85 |
| Anlösbarkeit 1' ²⁾ | [0-5] | 2244 | 2244 | 2244 |
| Erichsen Tiefung nach DIN 53157 | mm | 10,0 | 10,0 | 10,0 |
| Impact-Test | ein/aus | >80/>80 | >80/>80 | >80/>80 |
| Gitterschnitt Haftungstest nach DIN 53151 ³⁾ | | 0 | 0 | 2 |
| Salzsprüh-Test nach DIN 53167 | Unterwanderung nach 144 Stunden in mm | 25 | 32 | 45 |
| Einbrennbedingung: | | 10'RT | + 30' | 140°C |
| Aussehen Lackfilm | | in Ordnung | in Ordnung | in Ordnung |
| Pendelhärte nach DIN 53157 | [s] | 197 | 197 | 121 |
| Anlösbarkeit 1' ²⁾ | [0-5] | 0024 | 0024 | 2244 |
| Erichsen Tiefung nach DIN 53157 | mm | 10,0 | 10,0 | 10,0 |
| Impact-Test | ein/aus | >80/>80 | >80/>80 | >80/>80 |
| Gitterschnitt Haftungstest nach DIN 53151 ³⁾ | | 0 | 0 | 2 |
| Salzsprüh-Test nach DIN 53167 | Unterwanderung nach 144 Stunden in mm | 6 | 7 | 12 |

| | | | | |
|---|---|---|---|---|
| ¹⁾ Bayhydrol PT 241: 40 %-ige hydroxyfunktionelle Polyester-Polyurethan-Dispersion, Bayer MaterialScience AG, Leverkusen Deutschland) ²⁾ Die Anlösbarkeit wird bestimmt durch Belastung des Lackes mit 4 verschiedenen Lösungsmitteln für 1 Minute und anschließender visueller Beurteilung der aufgetretenen Schädigung: 0 = keine Schädigung (beste Bewertung); 5 = aufgelöst (schlechteste Bewertung). ³⁾ 0 = optimale Haftung, keine Beschädigung, 5 = schlechte Haftung, starke Beschädigung | | | | |

Alle Lacke zeigen bei einer Lagerung bei 40°C eine gute Lagerstabilität.

Die Filme auf Basis der erfindungsgemäßen Polyurethan-Dispersionen sind nach Applikation und Ablüften bei Raumtemperatur im Gegensatz zum Vergleichsversuch klebfrei und somit wesentlich unempfindlicher beispielsweise bezüglich Staub- bzw. Fremdkörpereinschlüssen oder gegen unabsichtliches Berühren.

Die Filmoptik aller Lacke war in Ordnung, Fülle, Glanz und Verlauf entsprachen voll den Anforderungen.

Bei dem Aushärten der Lacke bei 120°C zeigen die erfindungsgemäßen Lacke im Vergleich zu dem Vergleichsbeispiel eine signifikant höhere Härte, bei vergleichbarer exzellenter Elastizität und ausreichender Lösungsmittelbeständigkeit.

Die Lacke auf Basis der erfindungsgemäßen Dispersionen zeigen darüber hinaus eine bessere Haftung bei dem Gitterschnitttest und ein besseres Ergebnis im Salzsprühtest, die Unterwanderung durch Rost an einem Schnitt ist geringer.

Bei Aushärtung bei 140°C zeigen die Lacke auf Basis der erfindungsgemäßen Dispersionen insgesamt ein exzellentes Eigenschaftsbild. Sie vereinen in bisher nicht bekannter Weise eine sehr hohe Härte mit einer exzellenten Elastizität, verbunden mit sehr guter Haftung, einem sehr guten Salzsprühtestergebnis und guter Lösungsmittelbeständigkeit.

Die erfindungsgemäßen Dispersionen ermöglichen die Herstellung von Einbrennlacken mit bisher nicht gekanntem Eigenschaftsniveau und stellen einen erheblichen Fortschritt zum Stand der Technik dar.

### Polyurethan-Dispersion 11)

377,5 g Polyester A) und 24,7 g Hydroxypivalinsäure werden unter Rühren in 170 g heißem Aceton gelöst und dann mit 82,9 g Butanonoxim versetzt. Anschließend werden unter Rühren 250 ppm Desmorapid® O und dann bei 45 °C eine Mischung aus 62,8 g Hexamethylendiisocyanat und 214,5 g Desmodur® N3300zugegeben und der Ansatz bei 50°C solange gerührt, bis der Isocyanatgehalt < 0,1% beträgt. Dann wird mit 18,6 g Dimethylethanolamin neutralisiert, durch Zugabe von 780 g destilliertem Wasser dispergiert und das Aceton im leichten Vakuum abdestilliert. Man erhält eine vernetzbare, blockierte Isocyanatgruppen enthaltende Polyurethan-Dispersion 10) mit einem Festkörpergehalt von 50 %, einem pH-Wert von 8,2, einer Viskosität von 20 mPAs/23°C und einer mittleren Teilchengröße von 84 nm.

### Polyurethan-Dispersion 12)

391,4 g Polyester A) und 24,7 g Hydroxypivalinsäure werden unter Rühren in 170 g heißem Aceton gelöst und dann mit 107,6 g Epsilon-Caprolactam versetzt. Anschließend werden unter Rühren 250 ppm Desmorapid® SO und dann bei 45 °C eine Mischung aus 62,8 g Hexamethylendiisocyanat und 214,5 g Desmodur® N3300 zugegeben und der Ansatz bei 50°C solange gerührt, bis der Isocyanatgehalt < 0,1 % beträgt. Dann wird mit 18,6 g Dimethylethanolamin neutralisiert, durch Zugabe von 780 g destilliertem Wasser dispergiert und das Aceton im leichten Vakuum abdestilliert. Man erhält eine vernetzbare, blockierte Isocyanatgruppen enthaltende PolyurethanDispersion 12) mit einem Festkörpergehalt von 50 %, einem pH-Wert von 8,2, einer Viskosität von 20 mPAs/23°C und einer mittleren Teilchengröße von 84 nm.

### Polyurethan-Dispersion 13)

356,2 g Polyester A), 33,5 g Desmophen® 670 (Bayer MaterialScience AG, Leverkusen, Deutschland, hydroxyfunktioneller, verzweigter aromatischer Polyester mit einem OH-Equivalentgewicht von 372 g/Mol), 50, 3 g Dimethylpyrazol und 6,9 g Dimethylolpropionsäure werden unter Rühren in 170 g heißem Aceton gelöst. Anschließend werden unter Rühren 250 ppm Desmorapid® SO und dann bei 45 °C eine Mischung aus 90,7 g Hexamethylendiisocyanat und 105,3 g Desmodur® N3300 zugegeben und der Ansatz bei 50°C solange gerührt, bis der Isocyanatgehalt 1,4% beträgt. Dann werden 27,5 g Diethanolamin auf einmal zugegebenen und solange gerührt, bis der Isocyanatgehalt < 0,1 % beträgt. Dann wird mit 4,6 g Dimethylethanolamin neutralisiert, durch Zugabe von11500 g destilliertem Wasser dispergiert und das Aceton im leichten Vakuum abdestilliert. Man erhält eine selbstvemetzende, blockierte lsocyanatgruppen enthaltende Polyurethan-Dispersion 13) mit einem Festkörpergehalt von 39 %, einem pH-Wert von 7,8, einer Viskosität von 220 mPAs/23°C und einer mittleren Teilchengröße von 100 nm.

### Polyurethan-Dispersion 14)

306,6 g Polyester A), 28,6 g Hydroxypivalinsäure, 33,8 g Glycerin und 94,5 g Dimethylpyrazol werden unter Rühren in 301 g heißem Aceton gelöst. Anschließend werden unter Rühren 150 ppm Desmorapid® SO und dann bei 45 °C 240 g Hexamethylendiisocyanat zugegeben und der Ansatz bei 50°C solange gerührt, bis der Isocyanatgehalt < 0,1% beträgt. Dann wird mit 21,5 g Dimethylethanolamin neutralisiert, durch Zugabe von 900 g destilliertem Wasser dispergiert und das Aceton im leichten Vakuum abdestilliert. Man erhält eine vernetzbare, blockierte Isocyanatgruppen enthaltende Polyurethan-Dispersion 14) mit einem Festkörpergehalt von 54 %, einem pH-Wert von 7,1, einer Viskosität von 11 mPAs/23°C und einer mittleren Teilchengröße von 100 nm.

### Polyurethan-Dispersion 15)

263,1 g Polyester A), 30,9 g 6-Aminohexansäure und 115,9 g Dimethylpyrazol werden unter Rühren in 242 g heißem Aceton gelöst. Anschließend werden unter Rühren 150 ppm Desmorapid® SO und dann bei 45 °C eine Mischung aus 273,6 g Desmodur® N 3300 und 44,4 g Hexamethylendiisocyanat zugegeben und der Ansatz bei 50°C solange gerührt, bis der Isocyanatgehalt < 0,1% beträgt. Nach Zugabe von 21 g Dimethylethanolamin wird durch Zugabe von 700 g destilliertem Wasser dispergiert und das Aceton im leichten Vakuum abdestilliert. Man erhält eine vernetzbare, blockierte Isocyanatgruppen enthaltende Polyurethan-Dispersion 15) mit einem Festkörpergehalt von 49 %, einem pH-Wert von 7,8 einer Viskosität von 14 mPas/23°C und einer mittleren Teilchengröße von 87 nm.

Die selbstvernetzende Polyurethan-Dispersion 13) wurde unter zwei verschiedenen Einbrennbedingungen geprüft:

| | |
|---|---|
| **Beispiel 13** | |
| Aussehen Lackfilm nach Trocknung bei Raumtemperatur | |
| Stippen m (0-5) g (0-5)⁴⁾ | m1 g1 |
| Verlauf; Fülle | sehr gut |
| Oberfläche | klebfrei |
| Einbrennbedingung: 10 Min. RT + 30 Min. 140°C | |
| Pendelhärte in (s) nach DIN 53157 | 216 |
| Erichsen Tiefung in (mm) nach DIN | 10 |
| 53157 | |
| Anlösbarkeit 1 Min. (0-5) | 0224 |
| Gitterschnitt Haftungstest nach DIN 53151 | 0 |
| Aussehen des Lackfilms | i. O. |
| Einbrennbedingung: 10 Min. RT + 30 Min. 160°C | |
| Pendelhärte in (s) nach DIN 53157 | 217 |
| Erichsen Tiefung in ( mm) nach DIN 53157 | 10 |
| Anlösbarkeit 1 Min. (0-5) | 0024 |
| Gitterschnitt Haftungstest nach DIN 53151 | 0 |
| Aussehen des Lackfilms | i. O. |
| ⁴⁾ Beurteilung Menge m und Größe g der Stippen/Gelteilchen | im |
| Film. 0 = bester Wert, 5 0 schlechtester Wert | |

Die erfindungsgemäße Dispersion 13) lieferte ebenfalls ausgezeichnete Film-Werte bezüglich Härte, Elastizität, Haftung, Film aussehen und Trocknung.

Die erfindungsgemäßen, vernetzbaren Polyurethan-Dispersionen 11) und 12) wurden wie oben beschrieben in Kombination mit einer hydroxyfunktionellen Polyester-Polyurethan-Dispersion als Einbrennlack geprüft. Die Einbrenntemperatur betrug 160°C. Die Mengenverhältnisse wurden so gewählt, dass das Verhältnis von blockierten Isocyanatgruppen zu Hydroxylgruppen 1:1 betrug. Folgende Prüfergebnisse wurden erhalten:

| | | **Beispiel 11** | **Beispiel 12** |
|---|---|---|---|
| Bindemittelverhältnis | | NCO:OH = 1,0 | |
| Einbrennbedingung: | | 10'RT + 30' 160°C | |
| Trocknung bei Raumtemperatur | | klebfrei | klebfrei |
| Pendelhärte nach DIN 53157 | [s] | 164 | 171 |
| Anlösbarkeit 1' | [0-5] | 0011 | 0022 |
| Erichsen Tiefung nach DIN 53157 | mm | 10,0 | 10,0 |
| lmpact-Test | ein/aus | >80/>80 | >80/>80 |
| Gitterschnitt Haftungstest nach DIN 53151 | | 0 | 0 |
| Salzsprüh-Test nach DIN 53167 | Unterwanderung nach 144 Stunden in mm | 6 | 5 |

Auch unter diesen Einbrennbedingungen wurden exzellente Werte bezüglich Härte, Elastizität, Lösungsmittelbeständigkeit, Haftung und Salzsprüh-Test erhalte.

## Patentansprüche

1. Vemetzbare Polyurethan-Dispersionen enthaltend
a) mindestens einen hydroxyfunktionellen aromatischen Polyester mit einer mittleren OH-Funktionalität von 1,5 bis 3,5 hergestellt aus Terephthalsäure,
b) mindestens ein isocyanatreaktiven Hydrophilierungsmittel, das mindestens eine Säuregruppe und mindestens eine gegenüber Isocyanatgruppen reaktionsfähigen Gruppe aufweist,
c) mindestens ein, mindestens difunktionelles Polyisocyanat und
d) mindestens ein gegenüber NCO-Gruppen reaktives Blockierungsmittel.

2. Vernetzbare Polyurethan-Dispersionen gemäß Anspruch 1 enthaltend a) 20 bis 80 Gew.-% mindestens eines hydroxyfunktionellen aromatischen Polyesters mit einer mittleren OH-Funktionalität von 1,75 bis 3 hergestellt aus Terephthalsäure,
b) 0,7 bis 9 Gew. -% mindestens eines isocyanatreaktiven Hydrophilierungsmittels, das mindestens eine Säuregruppe und mindestens eine gegenüber lsocyanatgruppen reaktionsfähigen Gruppe aufweist,
c) 15 bis 60 Gew.-% mindestens eines, mindestens difunktionellen Polyisocyanates,
d) 2 bis 30 Gew.-% mindestens eines gegenüber NCO-Gruppen reaktives Blockierungsmittel und
e) 0 bis 40 Gew.-% sonstiger Komponenten,
wobei sich die Prozentangaben a) bis e) zu 100% ergänzen.

3. Vemetzbare Polyurethan-Dispersionen gemäß Anspruch 1 oder 2 enthaltend mindestens einen Polyester a), der das Umsetzungsprodukt ist aus
a1) Terephthalsäure und ggf. mindestens einer weiteren aromatischen Di-und/oder Tricarbonsäure bzw. deren Anhydrid,
a2) mindestens einem Diol,
a3) ggf. weiteren Komponenten wie beispielsweise Triolen, Tetraolen, monofunktionellen Alkoholen, Monocarbonsäuren, Monoepoxiden, Bisepoxiden, Polyepoxiden, Lactonen und/oder aliphatischen bzw. cycloaliphatischen Di-oder Tricarbonsäuren bzw. deren Anhydriden,
wobei der Anteil an Komponente a1) an der Menge der Komponente a1) bis a3) mindestens 38 Gew.-%, bevorzugt mindestens 52 Gew.- % beträgt.

4. Vemetzbare Polyurethan-Dispersionen gemäß einem oder mehreren der Ansprüche 1 bis 3 enthaltend als Komponente a) mindestens eine Polyester mit einer Hydroxylzahl von 10 bis 230 mg KOH/g Substanz, der das Umsetzungsprodukt ist aus
a1) 38 bis 72 Gew.-% einer Mischung aus Terephthalsäure und ggf. mindestens einer weiteren aromatischen Di- und/oder Tricarbonsäure bzw. deren Anhydrid,
a2 ) 20 bis 55 Gew. -% mindestens eines Diols,
a3) 0 bis 40 Gew. % weiterer Komponenten umfassend Triole, Tetraole, monofunktionelle Alkohole, Monocarbonsäuren, Monoepoxide, Bisepoxide, Polyepoxide, Lactone, aliphatische bzw. cycloaliphatische Di- oder Tricarbonsäuren bzw. deren Anhydriden,
wobei in der eingesetzten Menge der Komponenten a1) mindestens 15 Gew.-%, bevorzugt mindestens 40% und besonders bevorzugt mindestens 48% Terephthalsäure enthalten ist.

5. Vemetzbare Polyurethan-Dispersionen gemäß einem oder mehreren der Ansprüche 1 bis 4, **dadurch gekennzeichnet, dass** die Komponente a) einen Polyester aufweist, dessen Glasübergangstemperatur bei > 5°C liegt.

6. Vemetzbare Polyurethan-Dispersionen gemäß Anspruch 1 oder 2, **dadurch gekennzeichnet, dass** als Hydrophilierungsmittel b) Hydroxypivalinsäure und/oder 6-Aminohexansäure enthalten ist.

7. Vemetzbare Polyurethan-Dispersionen gemäß Anspruch 1 oder 2, **dadurch gekennzeichnet, dass** als sonstige Komponente anhydridfunktionelle Hydrophilierungsmittel e) enthalten sind.

8. Vemetzbare Polyurethan-Dispersionen gemäß Anspruch 1 oder 2, **dadurch gekennzeichnet, dass** als Komponente c) eine Polyisocyanatkomponente eingesetzt wird, die zu
62 bis 100 Gew.-% aus Hexamethylendiisocyanat und/oder Polyisocyanaten auf Basis von Hexamethylendiisocyanat mit Uretdion-, lsocyanurat-, Urethan-, Allophanat-, Biuret-, Carbodiimid-, lminooxadiazindion- und/oder Oxadiazintrionstrukturen und zu 0 bis 38 Gew.-% aus wenigstens einer Verbindung ausgewählt aus der Gruppe bestehend aus Isophorondiisocyanat, 4,4'-Diisocyanatodicyclohexyl-methan, 1-Methyl-2,4-diisocyanatocyclohexan, 1-Methyl-2,6-diisocyanatocyclo-hexan, 2,4-Diisocyanatotoluol und/oder 2,6-Diisocyanatotoluol besteht.

9. Vernetzbare Polyurethan-Dispersionen gemäß Anspruch 1), **dadurch gekennzeichnet, dass** sie Umsetzungsprodukte enthalten aus
a) 30 bis 65 Gew.-% eines hydroxyfunktionellen aromatischen Polyesters mit einer mittleren OH-Funktionalität von 1,9 bis 2,75, einem Molekulargewicht Mw von 900 bis 3000 g/mol und einer Säurezahl von 0,5 bis 5 mg KOH/g Substanz enthaltend
a1) 38 bis 72 Gew. -% Terephthalsäure und ggf. Isophthalsäure und/oder Phthalsäureanhydrid, wobei a1) zu mindestens 40 Gew.-% aus Terephthalsäure besteht,
a2) 20 bis 55 Gew. -% mindestens einer Verbindung ausgewählt aus der Gruppe bestehend aus Neopentylglykol, Ethylenglykol, Propylenglykol, Butandiol, Diethylenglykol und Hexandiol und
a3) 0 bis 10 Gew. -% mindestens einer Verbindung ausgewählt aus der Gruppe bestehend aus Adipinsäure, Rizinusöl, Glycerin und Trimethylolpropan,
b) 2 bis 6 Gew. -% Hydroxypivalinsäure,
c) 30 bis 50 Gew.-% mindestens eines, mindestens difunktionellen Polyisocyanates enthaltend Hexamethylendiisocyanat,
d) 4 bis 18 Gew.-% mindestens eine Verbindung ausgewählt aus der Gruppe bestehend aus Dimethylpyrazol, Butanonoxim und Caprolactam,
e) 0 bis 20 Gew.-% mindestens einer Verbindung ausgewählt aus der Gruppe bestehend aus Trimellithsäureanhydrid, monohydroxyfunktionellen hydrophilen Polyethern, hydroxyfunktionellen Polyestern, hydroxyfunktionellen C2-, C3-, C4 Polyether, hydroxyfunktionellen Polycarbonaten, Ethylendiamin, Isophorondiamin, Diethanolamin, N-Methylethanolamin, Hydroxyethylethylendiamin, Hydrazin, Hydrazinhydrat, Diethylentriamin, Stearylalkohol und Benzyalkohol,
wobei sich die Prozentangaben a) bis e) bzw. a1) bis a3) jeweils zu 100% ergänzen.

10. Beschichtungsmittel, die wässrige Polyurethandispersion nach einem oder mehreren der Ansprüche 1 bis 9 enthalten.

11. Beschichtungsmittel nach Anspruch 10, die ausgewählt sind aus der Gruppe von Farben, Lacken und Klebstoffen.

12. Verfahren zur Beschichtung von Substraten, wobei Beschichtungsmittel gemäß Anspruch 10 oder 11 eingesetzt werden.

13. Verfahren nach Anspruch 12, wobei Kraftfahrzeugkarosserien oder Teile von Kraftfahrzeugkarosserien mit einem Beschichtungsmittel nach Anspruch 10 oder 11 beschichtet werden.

14. Substrat enthaltend eine Beschichtung, die das Beschichtungsmittel nach einem der Ansprüche 10 oder 11 enthält.

15. Substrat nach Anspruch 14, wobei das Substrat eine vollständige Kraftfahrzeugkarosserie oder Teile einer Kraftfahrzeugkarosserie ist.
